# EUROPEAN PATENT APPLICATION

(11) **EP 4 520 943 A1**
(43) Date of publication of application: **12.03.2025**
(21) Application number: 24199756.8
(22) Date of filing: 11.09.2024
(51) Int. Cl.: F02C 7/236, F02K 3/10

(54) **ENGINE AUGMENTOR FUEL PUMPS POWERED BY AUXILIARY POWER UNIT (APU)**

(30) Priority: 11.09.2023 US 202318244362
(71) Applicant: Hamilton Sundstrand Corporation, Charlotte, NC 28217-4578 (US)
(72) Inventor: RAMPRASHAD, Sachin, West Hartford, CT (US); SUSCA, Ryan Prescott, Windsor, CT (US)
(74) Representative: Dehns

(57) **Abstract**

A system includes an augmentor fuel pump (FP) (102) configured to be connected to be driven by a gearbox of an auxiliary power unit (APU) (106). An augmentor fuel control (AFC) (108) is connected in fluid communication with the AFP and configured to control supply of fuel to one or more engine augmentors. A controller (124) can be operatively connected to control the APU for a startup mode, a run mode, and a powered down mode.

## Description

### BACKGROUND

### 1. Field

The present disclosure relates to fuel systems, and more particularly to fuel systems for augmentors in gas turbine engines of aircraft.

### 2. Description of Related Art

Gas turbine engines with augmentors or afterburners need to have fuel pumps for the main combustor, for the augmentor, and potentially for hydraulic systems that use fuel as the working fluid. Typically, an augmentor fuel pump resides on the gear box of the engine. This typical arrangement loads the gear box full time with the augmentor fuel pump, even tough the augmentor is typically used very little of the time.

The conventional techniques have been considered satisfactory for their intended purpose. However, there is an ever present need for improved systems and methods for improved fuel systems for gas turbine engine augmentors. This disclosure provides a solution for this need.

### SUMMARY

A system includes an augmentor fuel pump (FP) configured to be connected to be driven by a gearbox of an auxiliary power unit (APU). An augmentor fuel control (AFC) is connected in fluid communication with the AFP and configured to control supply of fuel to one or more engine augmentors.

The APU can be operatively connected to the gearbox to mechanically drive the gearbox with rotational power. The gearbox can be operatively connected to the FP to mechanically drive the FP with rotational power. The one or more engine augmentors can be connected in fluid communication with the AFC to receive fuel. Each of the one or more engine augmentors can be part of a respective gas turbine engine. The respective gas turbine engine can include a main fuel pump (MFP) for supplying fuel to the respective gas turbine engine that is separate from the FP. The respective gas turbine engine can be a turbofan engine or a turbojet engine. The APU can be a turboshaft engine. The respective gas turbine engine can be larger in terms of power than the APU. The respective engine can be operative for generating aircraft thrust, and the APU can be operative for driving a generator for generating electrical power with the respective engine at low power or powered off.

A fuel pump isolator can be operatively connected to the FP for selectively isolating the FP into an isolated state for operation of the APU without operation of the one or more engine augmentors, and connecting the FP into an unisolated state for operation of the APU with operation of the one or more engine augmentors. A controller can be operatively connected to the fuel pump isolator to control between the isolated state and unisolated state based on state of the APU and based on user input commanding operation of the one or more engine augmentors.

The controller can be operatively connected to control the APU for a startup mode, a run mode, and a powered down mode. The controller can be configured to:
command the fuel pump isolator to put the FP into the isolated state;
command the APU to start up with the FP in the isolated state;
power down the APU after using the APU to start one or more main engines;
power up the APU and command the fuel pump isolator to put the FP into the unisolated state to supply fuel to one or more augmentors of the one or more main engines; and
command the APU to power down after supplying fuel to the one or more augmentors. The controller can be configured to command the fuel pump isolator to put the FP into the isolated state after commanding the APU to power down.

An input shaft can connect the gearbox to the FP for rotation of the FP. An inlet line can be connected in fluid communication with an inlet of the FP for supplying fuel to the FP. An outlet line can be connected in fluid communication with an outlet of the FP and with the AFC for supplying pressurized fuel to the AFC.

The fuel pump isolator can include a clutch in the input shaft configured to separate portions of the input shaft for rotation of the gearbox independent of rotation of the FP. The controller can be operatively connected to control the clutch.

The inlet line can include an inlet shut-off valve configured to selectively allow or block flow through the inlet line. The outlet line can include a check valve configured to prevent backflow through the outlet line to the FP. The controller can be operatively connected to the inlet shut-off valve to stop flow in the inlet line in the isolated state. The FP can be a centrifugal pump and an ejector can be connected in fluid communication to a branch of the outlet line that branches upstream of the check valve. The controller can be operatively connected to the ejector to drive flow through the ejector to dry the FP for the isolated state.

A method includes commanding fuel pump isolator to put an augmentor fuel pump (FP) into an isolated state. The method includes commanding an auxiliary power unit (APU) to start up with the FP in the isolated state, powering down the APU after using the APU to start one or more main engines, and powering up the APU and commanding the fuel pump isolator to put the FP into an unisolated state to supply fuel to one or more augmentors of the one or more main engines.

The method can include commanding the APU to power down after supplying fuel to the one or more augmentors. The method can include commanding the fuel pump isolator to put the FP into the isolated state after commanding the APU to power down.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic view of an embodiment of a system constructed in accordance with the present disclosure, showing the augmentor fuel pump (FP) connected to the gear box of the auxiliary power unit (APU);
Fig. 2 is a schematic view of a portion of the system of Fig. 1, showing a clutch for isolating the FP from the gearbox; and
Fig. 3 is a schematic view of a portion of the system of Fig. 1, showing a hydraulic isolator for the FP.

### DETAILED DESCRIPTION OF THE PREFERRED EMBODIMENTS

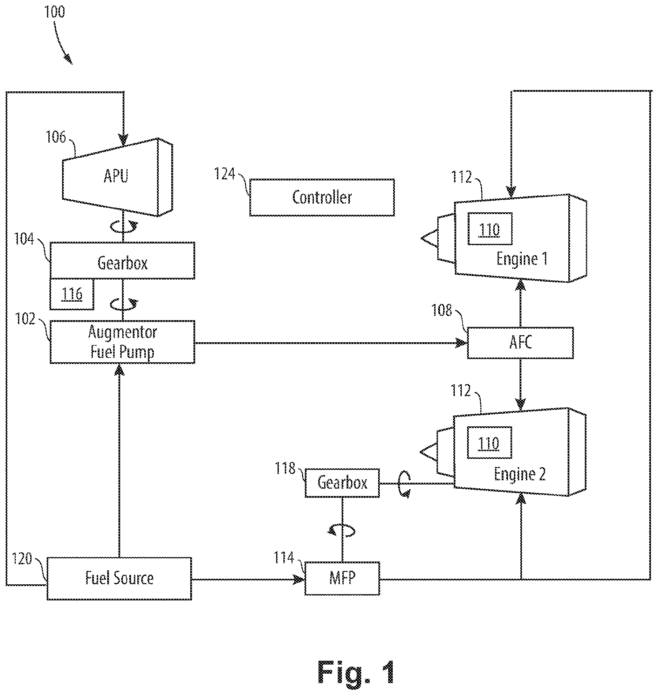

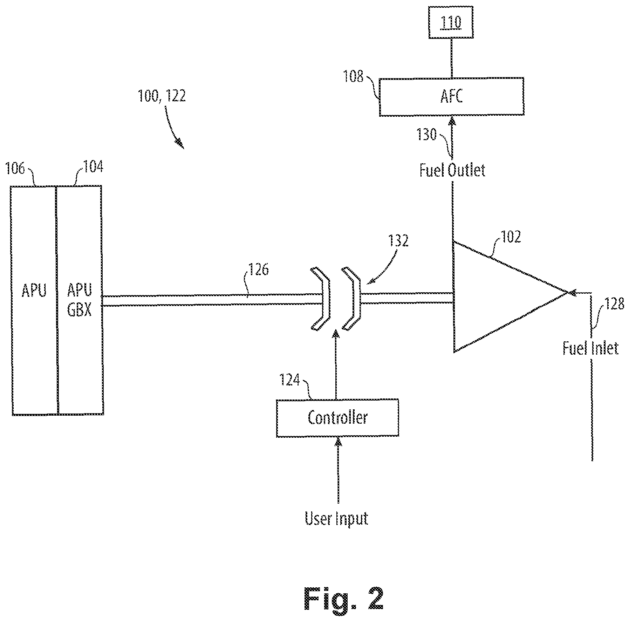

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. Other embodiments of systems in accordance with the disclosure, or aspects thereof, are provided in Figs. 2-3, as will be described. The systems and methods described herein can be used to provide for reduced weight and gearbox loading relative to traditional augmentor fuel pump systems.

The system 100 includes an augmentor fuel pump (FP) 102 configured to be connected to be driven by a gearbox 104 of an auxiliary power unit (APU) 106. An augmentor fuel control (AFC) 108 is connected in fluid communication with the AFP 102 and configured to control supply of fuel to one or more engine augmentors 110 of the main gas turbine engines 112 of an aircraft.

The APU 106 is operatively connected to the gearbox 104 to mechanically drive the gearbox 104 with rotational power, where rotation is indicated in Fig. 1 by the rotational arrows. The gearbox 104 is operatively connected to the FP 102, which can be a centrifugal pump, to mechanically drive the FP 102 with the rotational power ultimately derived from the APU 106. The one or more engine augmentors 110 are connected in fluid communication with the AFC 108 to receive fuel.

The gas turbine engines 112 include a main fuel pump (MFP) 114 for supplying fuel to the gas turbine engines 114, wherein the MFP 114 is a separate fuel pump from the FP 102, i.e. to the main combustor of each engine 114 for normal, non-afterburner operation of the engines 114. The MFP 116 is powered by rotational power from a main gearbox 118, which is rotationally driven by one or more of the main engines 112. Also note that the APU 106 can itself be fueled by the MFP 114, not from the FP 102, which is not always running when the APU 106 needs fuel. Those skilled in the art will readily appreciate that the engines 106/112 can share an MFP 114, or can each have a separate MFP 114. The MFP 114 and FP 102 each draw fuel from a common source 120, e.g. a fuel tank with or without a boost pump.

The gas turbine engines 112 are thrust generating turbofan or turbojet engines, wherein the augmentors 110 provide a thrust boost for short durations during a typical flight. The APU 106 is non-thrust generating a turboshaft engine that is operative for driving a generator 116 for generating electrical power when the main engines 112 are at a low power level or powered off, e.g. for powering electrical systems on the aircraft when the main engines 112 are powered off, and for use in driving electrical starter motors for starting up the main engines 112.

With reference now to Figs. 2-3, a fuel pump isolator 122 is operatively connected to the FP 102 for selectively isolating the FP 102 into an isolated state for operation of the APU 106 without operation of the one or more engine augmentors 110. The isolation system 122 connects the FP 102 into an unisolated state for operation of the APU 106 with operation of the one or more engine augmentors 110. A controller 124 is operatively connected to the fuel pump isolator 122 to control between the isolated state and unisolated state based on state of the APU 106 and based on user input 126 commanding operation of the one or more engine augmentors 110.

The controller 124 is operatively connected to control the APU to implement methods as disclosed herein, e.g., for a startup mode, a run mode, and a powered down mode, e.g. using machine readable instructions in digital form controlling a processor, analogue circuitry, digital logic, or the like. The controller 124 is configured to command the fuel pump isolator 122 to put the FP 102 into the isolated state, to command the APU 106 to start up with the FP 102 in the isolated state, later to power down the APU 106 after using the APU 106 for powering aircraft systems with the main engines 112 powered down, and then to start one or more main engines 112 (labeled in Fig. 1). The controller 124 is configured to, e.g. during flight operation of the main engines 112 of Fig. 1, receive the user input for activating the augmentors 110, and to power up the APU 106. At this time, the controller 124 can command the fuel pump isolator 122 to put the FP 102 into the unisolated state to supply fuel to one or more augmentors 110. Upon receipt of user input indicating shutdown of the augmentors 110, the controller can command the APU 106 to power down after supplying fuel to the one or more augmentors 110. This can include the controller commanding the fuel pump isolator 122 to put the FP back into the isolated state after commanding the APU 106 to power down, e.g. to make the FP 102 and APU 106 ready for the next main engine startup, for the next operation of the augmentors 110, or for the next operation of the APU for powering the aircraft without power from the main engines 112 (labeled in Fig. 1). Those skilled in the art will readily appreciate that the user input can come from a pilot on board the aircraft, from a remotely located pilot, or from an autonomous flight system onboard or remote from the aircraft.

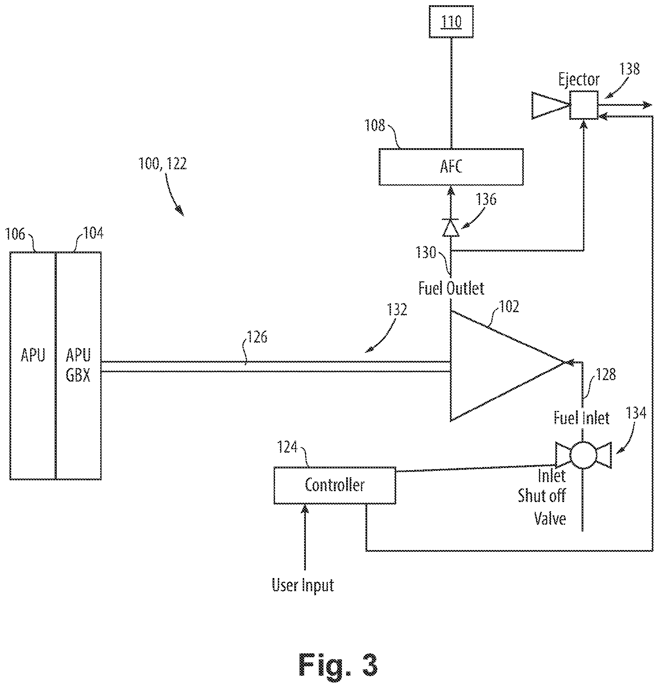

Fig. 2 shows mechanical isolation components of the isolator 122. An input shaft 126 connects the gearbox 104 to the FP 102 for rotation of the FP 102. An inlet line 128 is connected in fluid communication with an inlet of the FP 102 for supplying fuel to the FP 102. An outlet line 130 is connected in fluid communication with an outlet of the FP 102 and with the AFC 108 for supplying pressurized fuel to the AFC 108. The fuel pump isolator 122 includes a clutch 132 in the input shaft 126 configured to separate portions of the input shaft 126 for rotation of the gearbox 104 independent of rotation of the FP 102. The controller 124 is operatively connected to control the clutch 132, e.g. to disconnect the gearbox 104 from the FP 102 for the isolated state of the FP 102, and to connect the FP 102 to the gearbox 104 for the unisolated state. Fig. 3 shows hydraulic isolation aspects of the isolator 122. Those skilled in the art will readily appreciate that the mechanical isolation of Fig. 2 can be used in conjunction with the hydraulic isolation of Fig. 3, or either could be used in lieu of the other.

With reference now to Fig. 3, the inlet line 128 includes an inlet shut-off valve 134 configured to selectively allow or block flow through the inlet line 128, for the unisolated and isolated state commands from the controller 124, respectively. The outlet line 130 includes a check valve 136 configured to prevent backflow through the outlet line 130 to the FP 102. The controller 124 is operatively connected to the inlet shut-off valve 134 to stop flow in the inlet line 128 in the isolated state. An ejector 138 is connected in fluid communication to a branch of the outlet line 130 that branches upstream of the check valve 136. The controller 124 is operatively connected to the ejector 138 to drive flow through the ejector 138 to dry the FP 102 for the isolated state.

Systems and methods as disclosed herein provide a single centrifugal style pump that is mechanically driven from the APU and can provide augmentation fuel flow to one or more gas turbine engines. If augmentor flow is required, the APU can be started mid-flight to drive the augmentor fuel pump (FP). The FP can be (1) on a clutched driveline and/or (2) a "dry-out" pump, such that it is not producing pressure unless commanded via an electrical input from the engine FADEC (full authority digital engine control). The controller 124 can be a separate unit, or can be incorporated into the FADEC.

Systems and methods as disclosed herein provide potential benefits including the following. Traditionally each engine had its own augmentor pump that had to spin when the engine was spinning, creating mechanical drag on the engine that reduced efficiency. It also created some heat loads in the fuel system. By driving a single pump from the APU, it the fuel pump for the augmentors can operate when needed, and be able to feed one or more engines, depending on the application.

The methods and systems of the present disclosure, as described above and shown in the drawings, provide for reduced weight and gearbox loading relative to traditional augmentor fuel pump systems. While the apparatus and methods of the subject disclosure have been shown and described with reference to preferred embodiments, those skilled in the art will readily appreciate that changes and/or modifications may be made thereto without departing from the scope of the invention as defined by the claims.

## Claims

1. A system comprising:
an augmentor fuel pump, FP, (102) configured to be connected to be driven by a gearbox (118) of an auxiliary power unit, APU (106); and
an augmentor fuel control, AFC, (108) connected in fluid communication with the AFP and configured to control supply of fuel to one or more engine augmentors.

2. The system as recited in claim 1, further comprising the APU and the gearbox of the APU, wherein the APU is operatively connected to the gearbox to mechanically drive the gearbox with rotational power, and wherein the gearbox is operatively connected to the FP to mechanically drive the FP with rotational power.

3. The system as recited in claim 2, further comprising the one or more engine augmentors (110) connected in fluid communication with the AFC to receive fuel.

4. The system as recited in claim 3, wherein each of the one or more engine augmentors is part of a respective gas turbine engine (114).

5. The system as recited in claim 4, wherein the respective gas turbine engine includes a main fuel pump, MFP, (114) for supplying fuel to the respective gas turbine engine that is separate from the FP.

6. The system as recited in claim 5, wherein the respective gas turbine engine is a turbofan engine or a turbojet engine, and optionally wherein the APU is a turboshaft engine.

7. The system as recited in claim 4, wherein the respective gas turbine engine is larger in terms of power than the APU, or wherein the respective engine is operative for generating aircraft thrust, and wherein the APU is operative for driving a generator (116) for generating electrical power with the respective engine at low power or powered off.

8. The system as recited in any preceding claim, further comprising a fuel pump isolator (122) operatively connected to the FP for selectively isolating the FP into an isolated state for operation of the APU without operation of the one or more engine augmentors, and connecting the FP into an unisolated state for operation of the APU with operation of the one or more engine augmentors.

9. The system as recited in claim 8, further comprising a controller (124) operatively connected to the fuel pump isolator to control between the isolated state and unisolated state based on state of the APU and based on user input commanding operation of the one or more engine augmentors, and optionally wherein the controller is operatively connected to control the APU for a startup mode, a run mode, and a powered down mode, and further optionally:
wherein the controller is configured to:
command the fuel pump isolator to put the FP into the isolated state;
command the APU to start up with the FP in the isolated state;
power down the APU after using the APU to start one or more main engines;
power up the APU and command the fuel pump isolator to put the FP into the unisolated state to supply fuel to one or more augmentors of the one or more main engines; and
command the APU to power down after supplying fuel to the one or more augmentors; and/or
wherein the controller is configured to command the fuel pump isolator to put the FP into the isolated state after commanding the APU to power down.

10. The system as recited in claim 9, further comprising:
an input shaft (126) connecting the gearbox to the FP for rotation of the FP;
an inlet line (128) connected in fluid communication with an inlet of the FP for supplying fuel to the FP; and
an outlet line (130) connected in fluid communication with an outlet of the FP and with the AFC for supplying pressurized fuel to the AFC.

11. The system as recited in claim 10, wherein the fuel pump isolator includes a clutch (132) in the input shaft configured to separate portions of the input shaft for rotation of the gearbox independent of rotation of the FP, and wherein the controller is operatively connected to control the clutch.

12. The system as recited in claim 10 or 11, wherein the inlet line includes an inlet shut-off valve (134) configured to selectively allow or block flow through the inlet line, wherein the outlet line includes a check valve (136) configured to prevent backflow through the outlet line to the FP, and wherein the controller is operatively connected to the inlet shut-off valve to stop flow in the inlet line in the isolated state.

13. The system as recited in claim 12, wherein the FP is a centrifugal pump and further comprising an ejector (138) connected in fluid communication to a branch of the outlet line that branches upstream of the check valve, wherein the controller is operatively connected to the ejector to drive flow through the ejector to dry the FP for the isolated state.

14. A method comprising:
commanding a fuel pump isolator (122) to put an augmentor fuel pump, FP, (102) into an isolated state;
commanding an auxiliary power unit, APU, (106) to start up with the FP in the isolated state;
powering down the APU after using the APU to start one or more main engines; and
powering up the APU and commanding the fuel pump isolator to put the FP into an unisolated state to supply fuel to one or more augmentors of the one or more main engines.

15. The method as recited in claim 14, further comprising:
commanding the APU to power down after supplying fuel to the one or more augmentors; and
commanding the fuel pump isolator to put the FP into the isolated state after commanding the APU to power down.
